# EUROPEAN PATENT APPLICATION

(11) **EP 4 738 448 A1**
(43) Date of publication of application: **06.05.2026**
(21) Application number: 24831616.8
(22) Date of filing: 06.06.2024
(51) Int. Cl.: H01M 4/13, H01M 4/62, H01M 10/052, H01M 10/0587, H01M 50/533

(54) **SECONDARY BATTERY**

(30) Priority: 28.06.2023 JP 2023106373
(71) Applicant: Panasonic Intellectual Property Management Co., Ltd., Kadoma-shi, Osaka 571-0057 (JP)
(72) Inventor: OMAE, Takanori, Kadoma-shi, Osaka 571-0057 (JP); UKA, Youichirou, Kadoma-shi, Osaka 571-0057 (JP); KISHI, Takuma, Kadoma-shi, Osaka 571-0057 (JP); YAMAMOTO, Norihisa, Kadoma-shi, Osaka 571-0057 (JP)
(74) Representative: Novagraaf International SA
(86) International application number: PCT/JP2024/020757
(87) International publication number: WO 2025/004746

(57) **Abstract**

A secondary battery includes a positive electrode, a negative electrode, an electrolyte, and a separator. The positive electrode and the negative electrode are wound with the separator therebetween. The positive electrode includes a band-shaped positive electrode current collector and a positive electrode mixture layer provided on the positive electrode current collector. The positive electrode includes a positive electrode edge portion that includes one edge of the positive electrode in the lateral direction, and a positive electrode main portion other than the positive electrode edge portion. The positive electrode edge portion includes one or more positive electrode current collector-exposed portions that are provided partially at respective positions along the longitudinal direction of the positive electrode current collector. The exposed portions do not include the positive electrode mixture layer from the one edge in the lateral direction to the positive electrode main portion. The positive electrode mixture layer contains a positive electrode active material and a binder. The binder contains a first resin in an amorphous state.

## Description

### [Technical Field]

The present disclosure relates to a secondary battery.

### [Background Art]

Patent Literature 1 proposes "a method of manufacturing an electrode sheet for use in a power storage device, including discharging a mixture slurry into discharge regions of a belt-like current collector that extend in the length direction of the current collector from discharge nozzles corresponding to the respective discharge regions to form a mixture layer on the current collector, wherein the discharge regions are arranged such that a part of each discharge region overlaps a part of another discharge region adjacent thereto when viewed in the length direction of the current collector to form an overlapping portion, the overlapping portion has a length of 8 mm or less in the width direction of the current collector, and the mixture slurry is intermittently discharged to form an uncoated portion on at least one of the discharge regions."

Patent Literature 2 proposes "an electrode sheet for use in a power storage device, including: a current collector having a substantially rectangular planar shape; and an active material layer formed on at least one surface of the current collector, wherein the current collector includes an exposed portion in a partial region in the longitudinal direction and at an end portion of the partial region in the width direction, and an electrode lead is to be connected to the exposed portion, and wherein, in a region in which the active material layer is formed, the elastic modulus of a first region adjacent to the exposed portion in the width direction is larger than the elastic modulus of a second region adjacent the exposed portion and the first region in the longitudinal direction".

### [Citation List]

### [Patent Literature]

[Patent Literature 1] Japanese Patent No. 6965162
[Patent Literature 2] Japanese Patent No. 6821595

### [Summary of Invention]

### [Technical Problem]

According to Patent Literatures 1 and 2, a high-capacity electrode sheet can be obtained due to the uncoated portion (or the exposed portion) of the mixture layer being reduced. However, as the energy density of the electrode increases, the mass of the mixture layer per unit area provided on the surface of the current collector increases to increase the difference in toughness between the coated portion and the uncoated portion. In addition, when the positive electrode and the negative electrode are wound with a separator interposed therebetween, a difference in degree of bending arises between the coated portion and the uncoated portion of the mixture layer. Therefore, fractures of the electrode are likely to occur at the boundary between the coated portion and the uncoated portion of the mixture layer.

### [Solution to Problem]

One aspect of the present disclosure relates to a secondary battery including: a positive electrode; a negative electrode; an electrolyte; and a separator, wherein the positive electrode and the negative electrode are wound with the separator therebetween, the positive electrode includes a positive electrode current collector having a band shape, and a positive electrode mixture layer provided on the positive electrode current collector, the positive electrode includes a positive electrode edge portion that includes one edge of the positive electrode in a lateral direction, and a positive electrode main portion other than the positive electrode edge portion, the positive electrode edge portion includes one or more positive electrode current collector-exposed portions that are provided partially at respective positions along a longitudinal direction of the positive electrode current collector, the positive electrode current collector-exposed portions not including the positive electrode mixture layer from the one edge of the positive electrode in the lateral direction to the positive electrode main portion, the positive electrode mixture layer contains a positive electrode active material and a binder, and the binder contains a first resin in an amorphous state.

### [Advantageous Effects of Invention]

According to the present disclosure, fractures of a positive electrode of a secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of a secondary battery according to an exemplary embodiment.
[FIG. 2] FIG. 2 is a schematic plan view of a positive electrode according to an exemplary embodiment.
[FIG. 3] FIG. 3 is a schematic plan view of a negative electrode according to an exemplary embodiment.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

Secondary batteries include nonaqueous electrolyte secondary batteries such as a lithium-ion secondary battery, a lithium-metal secondary battery, and a solid battery including a gel electrolyte or a solid electrolyte. That is, a secondary battery may be a liquid secondary battery including a liquid electrolyte as an electrolyte or an all-solid secondary battery including a solid electrolyte.

A secondary battery according to the present disclosure includes a positive electrode having a band shape, a negative electrode having a band shape, an electrolyte, and a separator provided between the positive electrode and the negative electrode. The positive electrode and the negative electrode are wound with the separator therebetween. That is, the secondary battery includes a wound electrode group. The cross-sectional shape of the wound electrode group perpendicular to the winding axis may be, for example, a circular shape or an elliptical shape, and the outer shape thereof may be, for example, a cylindrical shape, but it is not limited thereto.

### [Positive Electrode]

The positive electrode includes a positive electrode current collector having a band shape and a positive electrode mixture layer provided on the positive electrode current collector. The positive electrode mixture layer may be in the form of a film. The positive electrode includes a positive electrode current collector and a positive electrode mixture layer formed (or supported) on a part of the surface of the positive electrode current collector. Specifically, the positive electrode includes a positive electrode edge portion that includes one edge of the positive electrode in the lateral direction and a positive electrode main portion other than the positive electrode edge portion. The positive electrode edge portion includes one or more positive electrode current collector-exposed portions that are provided partially at respective positions along the longitudinal direction of the positive electrode current collector. The positive electrode current collector-exposed portions do not include the positive electrode mixture layer from the one edge in the lateral direction to the positive electrode main portion. It is possible that a plurality of positive electrode current collector-exposed portions are provided intermittently along the longitudinal direction of the positive electrode current collector.

The positive electrode mixture layer is formed of a positive electrode mixture. Since the positive electrode mixture contains a positive electrode active material as an essential component, the positive electrode mixture layer may be referred to as positive electrode active material layer. The positive electrode mixture layer is supported on one or both surfaces of the positive electrode current collector.

The positive electrode mixture contains a positive electrode active material and a binder as essential components, and can contain, for example, a conductive aid and a thickener as optional components. The binder contains a first resin in an amorphous state. Use of the first resin in an amorphous state as the binder can increase the toughness of the positive electrode mixture layer as a whole. Consequently, the difference in toughness between the positive electrode mixture layer-coated portion and the uncoated portion (the positive electrode current collector-exposed portion) is reduced. Even when the positive electrode and the negative electrode are wound with the separator therebetween, the difference in the degree of bending between the coated portion and the uncoated portion is less likely to arise. Therefore, fractures of the electrode at the boundaries between the coated portion and the uncoated portion are suppressed.

The binder may further contain a second resin in a crystalline state. Use of the second resin in a crystalline state as a portion of the binder can improve the adhesion between the positive electrode mixture layer and the positive electrode current collector while ensuring the toughness of the positive electrode mixture layer. However, from the viewpoint of ensuring high toughness, it is preferable that a mass M1 of the first resin and a mass M2 of the second resin contained in the binder satisfy M1/ (M1 + M2) ≤0.95.

The need to improve the adhesion between the positive electrode mixture layer and the positive electrode current collector increases as the energy density of the positive electrode is increased and the mass of the positive electrode mixture layer per unit area provided on the surface of the positive electrode current collector is increased. As such, as the mass of the positive electrode mixture layer per unit area provided on the surface of the positive electrode current collector is increased, the ratio M1/(M1 + M2) decreases. In contrast, as the toughness of the positive electrode mixture layer is increased, the appropriate value of the ratio M1/ (M1 + M2) increases.

From the viewpoint of ensuring the toughness of the positive electrode mixture layer and the adhesion between the positive electrode mixture layer and the positive electrode current collector in a well-balanced manner, the ratio M1/(M1 + M2) preferably satisfies 0.05 ≤ M1/(M1 + M2) ≤ 0.95, more preferably satisfies 0.1 ≤ M1/(M1 + M2) ≤0.9, and still more preferably satisfies 0.2 ≤ M1/(M1 + M2) ≤0.6.

The positive electrode mixture layer can be formed, for example, by applying a positive electrode slurry to a surface of the positive electrode current collector, followed by drying. Here, the positive electrode slurry is obtained by dispersing a positive electrode mixture containing particles of the positive electrode active material and a binder each being the essential components, and an optional component (e.g., a conductive aid) in a dispersion medium. The applied film after drying may be rolled, as necessary. The positive electrode mixture layer may be formed on one of the surfaces of the positive electrode current collector or may be formed on both surfaces. As the dispersing medium of the positive electrode slurry, N-methyl-2-pyrrolidone (NMP), cyclohexanone, an alcohol, or an ether is used, for example.

With the aim of increasing the energy density of secondary batteries, the positive electrode mixture layer is becoming thick and densely packed. The thicker and denser the positive electrode mixture layer, the larger the elastic modulus of the entire positive electrode. As such, sophisticated measures are required to suppress fractures of the positive electrode and peeling between the positive electrode current collector and the positive electrode mixture layer. In particular, in a case where the positive electrode edge portion includes a plurality of positive electrode current collector-exposed portions that are provided partially at respective positions, or intermittently, along the longitudinal direction of the positive electrode current collector, it is essential to suppress fractures at the boundaries between the exposed portions and the portion including the positive electrode mixture layer. Although it can be conceivable to suppress fractures at the boundaries by providing a first region and a second region having different elastic moduli in the positive electrode mixture layer, this makes it more difficult to provide significant difference in the elastic modulus as the positive electrode mixture layer becomes thicker and denser.

Incidentally, fractures of the positive electrode can be controlled by imparting toughness to the positive electrode mixture layer through use of the first resin in an amorphous state as a binder. The peeling between the positive electrode current collector and the positive electrode mixture layer can be also controlled by improving the adhesion between the positive electrode current collector and the positive electrode mixture layer through use of the second resin in a crystalline state as a portion of the binder. In addition, the balance between the toughness and the adhesiveness can be easily controlled by setting the ratio M1/(M1 + M2) even in a positive electrode including a thick and high-density positive electrode mixture layer. In such a case, the positive electrode mixture layer does not need to be applied separately to the first region and the second region.

As described above, the present disclosure is based on the finding that in a positive electrode including a positive electrode edge portion that includes positive electrode current collector-exposed portions provided partially at respective positions, or intermittently, along the longitudinal direction of the positive electrode current collector, a simple method of using as a binder only the first resin in an amorphous state or a combination of the first resin in an amorphous state and the second resin in a crystalline state is effective in suppressing the fractures of the positive electrode and the peeling off of the positive electrode mixture layer.

The mass of the positive electrode mixture layer per unit area provided on the surface of the positive electrode current collector may be, for example, 240 g/m² or more, 260 g/m² or more, or 280 g/m² or more. The larger the mass of the positive electrode mixture layer per unit area provided on the surface of the positive electrode current collector, the greater the effectiveness by combinational use of the first resin in an amorphous state and the second resin in a crystalline state. That is, it is easy to suppress both the fractures of the positive electrode and the peeling off of the positive electrode mixture layer in the positive electrode including the positive electrode edge portion that includes the positive electrode current collector-exposed portions provided partially at respective positions, or intermittently, along the longitudinal direction of the positive electrode current collector.

The mass of the positive electrode mixture layer per unit area provided on the surface of the positive electrode current collector may be, for example, 280 g/m² or more and 350 g/m² or less. When the mass of the positive electrode mixture layer per unit area provided on the surface of the positive electrode current collector is 350 g/m² or less, the effects of suppressing the fractures of the positive electrode and the peeling off of the positive electrode mixture layer can be sufficiently exerted.

It is noted that the positive electrode current collector is sheet-shaped and has a first surface and a second surface located on the side opposite thereto. The term "unit area on the surface of the positive electrode current collector" means "unit area on the first surface of the positive electrode current collector" or "unit area of the second surface on the positive electrode current collector". In other words, the mass of the positive electrode mixture layer per unit area provided on the surface of the positive electrode current collector means the mass of the positive electrode mixture layer per unit area provided on one of the surfaces of the positive electrode current collector.

The peel strength of the positive electrode mixture layer from the positive electrode current collector is preferably 10 N/m or more, for example, and a sufficient peel strength can be ensured by combinational use of the first resin in an amorphous state and the second resin in a crystalline state. The peel strength may be measured by a test in accordance with JIS K 6854.

The positive electrode mixture can contain the binder in an amount of, for example, 0.1 parts by mass or more and 10 parts by mass or less relative to 100 parts by mass of the positive electrode active material, and preferably 0.5 parts by mass or more and 2 parts by mass or less. This can allow for sufficient exertion of the effects of suppressing the fractures of the positive electrode and the peeling off of the positive electrode mixture layer, and can increase the content of the positive electrode active material in the positive electrode mixture layer. As a result, a positive electrode having a higher capacity and more durability can be obtained. Since the resins constituting a binder can be roughly classified into two types, amorphous resin and crystalline resin, it may be considered that the total amount of the first resin and the second resin corresponds to the entire amount of the binder.

In general, crystalline resins have a crystal portion (folded structure) and have a crystallization temperature (Ts) in addition to a glass-transition temperature (Tg). On the other hand, amorphous resins do not have a crystal portion (folded structure). Accordingly, they do not have a crystallization temperature (Ts), and have only a glass-transition temperature (Tg). Therefore, it can be said that a resin component having no Ts of the binder is the first resin in an amorphous state. Also, it can be said that a resin component having a Ts of the binder is the second resin in a crystalline state at least at temperatures lower than Ts.

The first resin and the second resin can be distinguished also by X-ray diffraction (XRD) analysis. When the first resin in an amorphous state is analyzed by XRD, the resulting XRD profile has only a halo pattern. On the other hand, when the second resin in a crystalline state is analyzed by XRD, the resulting XRD profile has a peak attributed to a crystal portion. Therefore, it can be said that a resin component having no peak other than the halo pattern in the XRD profile of the binder is the first resin in an amorphous state. Also, it can be said that a resin component having a peak attributed to the crystal portion in the XRD profile of the binder is the second resin in a crystalline state.

The binder can be separated, for example, by separating the positive electrode mixture layer from the positive electrode and mixing it with an acidic aqueous solution for reaction. Due to the presence of the acid, components such as the positive electrode active material are dissolved in the acidic aqueous solution. When the acidic aqueous solution is then filtered using a filter, a residue containing the binder can be obtained. The first resin, the second resin, and the other third components contained in the residue can be quantitatively separated by centrifugation, solvent extraction, or using a separation device such as a column. The separated components are assigned to either the first resin or the second resin by analysis using a thermal analyzer such as a differential scanning calorimeter (DSC) or an X-ray analyzer such as an XRD. From the masses of the first resin and the second resin, the ratio M1/(M1 + M2) can be calculated.

The first resin in an amorphous state may be a non-fluoropolymer. The non-fluoropolymer is a generic term for polymers having no fluorine atom (F) bonded to a carbon atom forming a main chain. The non-fluoropolymer hardly crystallizes and generally has high toughness. Among non-fluoropolymers, a rubber-based polymer is preferable in terms of high toughness. In addition, a nitrile-based or styrene-based polymer is preferable in terms of high miscibility with the second resin and also high heat resistance and high chemical resistance.

The nitrile-based polymer may be an acrylonitrile copolymer, for example. The acrylonitrile copolymer is a copolymer of acrylonitrile and, for example, styrene, butadiene, methacrylic acid, or acrylic acid, and may be constituted of 20 mol% to 80 mol% of acrylonitrile units, for example. The nitrile-based polymer may be an acrylonitrile-styrene copolymer or an acrylonitrile-styrene-acrylic acid copolymer, for example.

Among them, a nitrile group-containing rubber is particularly preferable in terms of, for example, high toughness, heat resistance, and chemical resistance. The nitrile group-containing rubber may be at least partially hydrogenated. The nitrile group-containing rubber can impart toughness and stretchability to the positive electrode mixture layer.

The nitrile group-containing rubber is a polymer exhibiting rubber elasticity, which is not only a nitrile-based polymer but also a rubber-based polymer. The nitrile group-containing rubber can be a copolymer having an acrylonitrile unit and a diene (e.g., butadiene) unit. Specifically, the nitrile group-containing rubber may be a nitrile rubber (NBR), an acrylonitrile-butadiene-styrene copolymer, an acrylonitrile-butadiene rubber copolymer, a hydrogenated nitrile rubber (H-NBR), or a modified product of any of these copolymers.

The styrene-based polymer may be a styrene copolymer, for example. The styrene copolymer is a copolymer of styrene and, for example, butadiene, methacrylic acid, or acrylic acid, and may be constituted of, for example, 20 mol% to 80 mol% of styrene units. The styrene-based polymer may be a styrene-butadiene copolymer or a styrene-butadiene-styrene copolymer, for example.

Among them, a styrene-containing rubber is particularly preferable in terms of, for example, high toughness, heat resistance, and chemical resistance. The styrene-containing rubber may be at least partially hydrogenated. The styrene-containing rubber can impart toughness and stretchability to the positive electrode mixture layer.

The styrene-containing rubber is a polymer exhibiting rubber elasticity, which is not only a styrene-based polymer but also a rubber-based polymer. The styrene-containing rubber can be a copolymer having a styrene unit and a diene (e.g., butadiene) unit. Specifically, the styrene-containing rubber can be a styrene-butadiene rubber (SBR), a styrene-based thermoplastic elastomer (SBS), a hydrogenated styrene-butadiene rubber (H-SBR), a hydrogenated styrene-based thermoplastic elastomer (SEBS), or a modified product of any of these copolymers.

The non-fluoropolymer may be polyvinyl chloride, polystyrene, polymethyl methacrylate, an acrylonitrile copolymer, polycarbonate, a modified polyphenylene ether, polyether sulfone, polyetherimide, or polyamideimide, for example. One first resin may be used by itself, or two or more first resins may be used in combination. However, the main component (e.g., 80% by mass or more) of the non-fluoropolymer is preferably a rubber-based polymer or a nitrile-based polymer.

A weight-average molecular weight Mw1 of the first resin is, for example, 1000 to 500,000, and may be 50,000 to 500,000. This makes it easy to ensure the toughness of the positive electrode, and makes the positive electrode mixture layer less likely to peel from the positive electrode current collector. In particular, the weight-average molecular weight Mw1 of the nitrile group-containing rubber may be 10,000 to 500,000, may be 20,000 to 300,000, or may be 100,000 to 300,000.

In the present specification, the weight-average molecular weight can be measured using a device such as a gel-permeation chromatograph (GPC) for each resin.

The second resin in a crystalline state may be a fluoropolymer. The fluoropolymer is a generic term for polymers having a fluorine atom (F) bonded to a carbon atom forming a main chain. The fluorine atom, which has a small atomic radius and a small polarizability, forms a stable carbon-fluorine bond, possesses a crystalline nature, and can achieve excellent heat resistance, weather resistance, and chemical resistance.

Among fluoropolymers, a polyvinylidene fluoride-based polymer can exhibit high binding strength. The polyvinylidene fluoride-based polymer is a fluoropolymer having a vinylidene fluoride unit. The polyvinylidene fluoride-based polymer may be polyvinylidene fluoride or a copolymer of vinylidene fluoride and another monomer. Examples of the other monomer include ethylene, propylene, tetrafluoroethylene (TFE), and hexafluoropropylene (HFP). The percentage of the vinylidene fluoride unit in all the monomer units is preferably in the range of 50 to 100 mol%, and preferably in the range of 75 to 100 mol%.

The polyvinylidene fluoride-based polymer may be polyvinylidene fluoride (PVDF) or a modified product thereof, a vinylidene fluoride-hexafluoropropylene copolymer, a vinylidene fluoride-tetrafluoroethylene copolymer, a vinylidene fluoride-chlorotrifluoroethylene copolymer, or a vinylidene fluoride-pentafluoropropylene copolymer, for example. One second resin may be used by itself, or two or more second resins may be used in combination. However, the main component (e.g., 80% by mass or more) of the fluoropolymer is preferably a polyvinylidene fluoride-based polymer.

A weight-average molecular weight Mw2 of the second resin is, for example, 300,000 to 2,000,000, and may be 500,000 to 1,500,000, or may be 1,000,000 to 1,500,000. This makes the positive electrode mixture layer less likely to peel from the positive electrode current collector while ensuring the toughness of the positive electrode.

The positive electrode active material can be a material that reversibly absorbs and releases lithium ions. The positive electrode active material may be a lithium-containing transition metal oxide, for example. Typical examples of the lithium-containing transition metal oxide include lithium cobaltate and lithium nickelate, each having a layered crystal structure of rock salt type.

As the positive electrode active material, a composite oxide containing lithium and a transition metal such as Ni, Co, or Mn can be used, for example. Examples thereof include LiₐCoO₂, LiₐNiO₂, LiₐMnO₂, LiₐCo_{b}Ni₁₋₈O₂, LiₐCO_{b}M_{1-b}O_{c}, LiₐNi₁₋₈M₈O_{c}, LiₐMn₂O₄, LiₐMn_{2-b}M₈O₄, LiMPO₄, and Li₂N4PO₄F (M is at least one selected from the group consisting of Na, Mg, K, Ca, Rb, Sr, Sc, Y, Ti, Zr, V, Nb, Mn, Fe, Co, Ni, Cu, Zn, Al, Cr, Pb, Sb, and B). Here, 0 < a ≤ 1.2, 0 < b ≤ 0.9, and 2.0 ≤ c ≤ 2.3. Note that the value "a" indicating the molar ratio of lithium increases or decreases during charging and discharging.

Among them, a lithium-nickel composite oxide represented by LiₐNi₁₋₈M₈O₂ (M is at least one selected from the group consisting of Mn, Co, and Al, 0 < a ≤ 1.2, and 0 < b < 0.7) is preferable. From the viewpoint of increasing the capacity, it is more preferable to satisfy 0 < b < 0.2. In terms of the stability of the crystal structure, LiₐNi₁₋₈CoaAlₑO_{c} containing Co and Al each as M or LiₐNi_{1-b}Co_{d}MnₑO_{c} containing Co and Mn each as M (0 < a ≤ 1.2, 0 < b < 0.2, 0 < d < 0.15, 0 < e ≤ 0.1, and b = d + e) is more preferrable.

Examples of the conductive aid include carbon materials such as graphite, carbon blacks such as furnace black and acetylene black, and carbon fibers (carbon nanotube (CNT) and carbon fibers other than CNT). One conductive aid may be used by itself, or two or more conductive aids may be used in combination.

As the positive electrode current collector, a non-porous conductive substrate (e.g., a metal foil) or a porous conductive substrate (e.g., a mesh, a net, or a punched sheet) is used. Examples of the material of the positive electrode current collector include stainless steel, aluminum, aluminum alloys, and titanium. The thickness of the positive electrode current collector is not particularly limited, but is preferably 1 to 50 µm, and more desirably 5 to 20 µm.

### [Negative Electrode]

The negative electrode includes a negative electrode current collector having a band shape. The negative electrode may include a negative electrode current collector and a negative electrode mixture layer or negative electrode active material layer formed (or supported) on the entirety or a part of a surface of the negative electrode current collector. The negative electrode mixture layer or negative electrode active material layer may be in the form of a film. The negative electrode mixture layer or negative electrode active material layer is supported on one or both surfaces of the negative electrode current collector.

The negative electrode mixture layer is formed of a negative electrode mixture. The negative electrode active material layer is formed of a negative electrode mixture or a negative electrode active material. Since the negative electrode mixture contains a negative electrode active material as an essential ingredient, the negative electrode mixture layer may be referred to as negative electrode active material layer. The negative electrode active material may be a material that reversibly absorbs and releases lithium ions, a lithium metal, or a lithium alloy. The negative electrode active material layer formed of a material other than the negative electrode mixture is formed of at least one selected from the group consisting of a lithium metal and a lithium alloy. The negative electrode mixture layer or negative electrode active material layer is supported on one or both surfaces of the negative electrode current collector.

The negative electrode mixture contains a negative electrode active material as an essential component, and can contain, for example, a binder, a conductive aid, and a thickener as optional components. The negative electrode mixture layer such as above can be formed, for example, by applying a negative electrode slurry to the surface of the negative electrode current collector, followed by drying. Here, the negative electrode slurry is obtained by dispersing a negative electrode mixture containing particles of a negative electrode active material being the essential component and the optional components in a dispersing medium. The applied film after drying may be rolled, as necessary.

When the negative electrode includes a negative electrode mixture layer, the negative electrode mixture layer may contain an alloy-based material. The alloy-based material contains a phase that reversibly forms an alloy with lithium. The phase that reversibly forms an alloy with lithium can be silicon (silicon phases), for example. The phases such as above highly significantly expand and contract by charging and discharging. The content of the alloy-based material of the negative electrode mixture layer in the negative electrode edge portion may be set larger than that in the negative electrode main portion. This can easily increase the negative electrode swelling ratio at the negative electrode edge portion than at the negative electrode main portion.

The category of the alloy-based material encompasses Si-containing materials, Sn-containing materials, Si, Sn, Si alloys, and Sn alloys, for example. Among these, an Si-containing material, which has a high capacity, is suitable as the negative electrode active material. The Si-containing material contains silicon phases. Silicon is capable of reversibly forming an alloy with lithium. The Si-containing material is a material capable of reversibly absorbing and releasing lithium ions.

Due to containing silicon (silicon phases), the silicon-containing material highly significantly expands and contracts by charging and discharging. By setting the content of the silicon-containing material in the negative electrode mixture layer larger at the negative electrode edge portion than at the negative electrode main portion, the negative electrode swelling ratio at the negative electrode edge portion can be easily set larger than that at the negative electrode main portion.

The silicon-containing material may be in the form of composite particles each containing silicon phases and a matrix phase in which the silicon phases are dispersed. The matrix phase should be formed of a material having lithium ionic conductivity. The matrix phase includes at least one selected from the group consisting of a silicon oxide phase and a carbon phase, for example.

The silicon oxide phase contains Si and O, and may further contain a third element other than Si and O. The silicon oxide phase may be constituted of SiO₂, lithium silicate, or both.

The composite particles (composite particles each containing silicon phases and a matrix phase in which the silicon phases are dispersed) formed of a silicon-containing material may be in any of the following forms (a) to (c), for example.
(a) First composite particles each containing silicon phases and a silicon dioxide (SiO₂) phase in which the silicon phases are dispersed.
(b) Second composite particles each containing silicon phases and a lithium silicate phase in which the silicon phases are dispersed.
(c) Third composite particles each containing silicon phases and a carbon phase in which the silicon phases are dispersed.

The material other than the Si-containing material is preferably a carbon material, a spinel-type lithium-titanium oxide, or a spinel-type lithium-manganese oxide, for example. Among these, a carbon material is preferable. The carbon material can be graphite, graphitizable carbon (soft carbon), or non-graphitizable carbon (hard carbon), for example. Among these, graphite, which has excellent stability during charging and discharging and a low irreversible capacity, is preferable.

Graphite refers to a carbon material in which the interplanar spacing d002 of the (002) plane as measured by X-ray diffractometry is, for example, 0.340 nm or less. The crystallite size Lc(002) of the graphite as measured by X-ray diffractometry may be, for example, 5 nm or more, 5 nm or more and 300 nm or less, or 10 nm or more and 200 nm or less.

The average particle diameter of the graphite is 1 µm or more and 30 µm or less, for example.

When the graphite and the silicon-containing material are used in combination, the proportion of the silicon-containing material in the negative electrode active material (the sum of the graphite and the silicon-containing material) is, for example, 1% by mass or more and 20% by mass or less, and may be 3% by mass or more and 15% by mass or less or 3% by mass or more and 10% by mass or less. In this case, improved cycle characteristics and a higher capacity can be easily achieved in a well-balanced manner.

Examples of the binder include resin materials such as: fluorocarbon resins (e.g., polytetrafluoroethylene and polyvinylidene fluoride (PVDF)); polyolefin resins (e.g., polyethylene and polypropylene); polyamide resins (e.g., aramid resins); polyimide resins (e.g., polyimide and polyamideimide); acrylic resins (e.g., polyacrylic acid, methyl polyacrylate, and ethylene-acrylic acid copolymers); vinyl resins (e.g., polyacrylonitrile and polyvinyl acetate); polyvinylpyrrolidone; polyethersulfone; and rubber-like materials (e.g., styrene-butadiene copolymer rubber (SBR)). One binder may be used by itself, or two or more binders may be used in combination.

Examples of the conductive aid include carbons such as acetylene black, carbon fibers (e.g., carbon nanotube (CNT) and carbon fibers other than CNT), metal fibers, and metal powders of, for example, aluminum. One conductive aid may be used by itself, or two or more conductive aids may be used in combination.

Examples of the thickener include: cellulose derivatives (e.g., cellulose ethers) such as carboxymethylcellulose (CMC) and modified products of these (including salts such as Na salts), and methylcellulose; and saponified products of polymers having a vinyl acetate unit such as polyvinyl alcohol. One thickener may be used by itself, or two or more thickeners may be used in combination.

As the negative electrode current collector, a non-porous conductive substrate (e.g., a metal foil) or a porous conductive substrate (e.g., a mesh, a net, or a punched sheet) is used. Examples of the material of the negative electrode current collector include stainless steel, nickel, nickel alloys, copper, and copper alloys. The thickness of the negative electrode current collector is not particularly limited, but is preferably 1 to 50 µm, and more desirably 5 to 20 µm.

Hereinafter, an exemplary secondary battery according to an embodiment of the present disclosure is specifically described with reference to the drawings. The above-described components can be applied to the components of the exemplary secondary battery described below. The components of the exemplary secondary battery described below can be altered based on the above description. Further, the matters described below may be applied to the embodiments described above. Among the components of the exemplary secondary battery described below, a component that is not essential to the secondary battery according to the present disclosure may be omitted. It should be noted that the drawings indicated below are schematic and do not accurately reflect the shape or number of actual members.

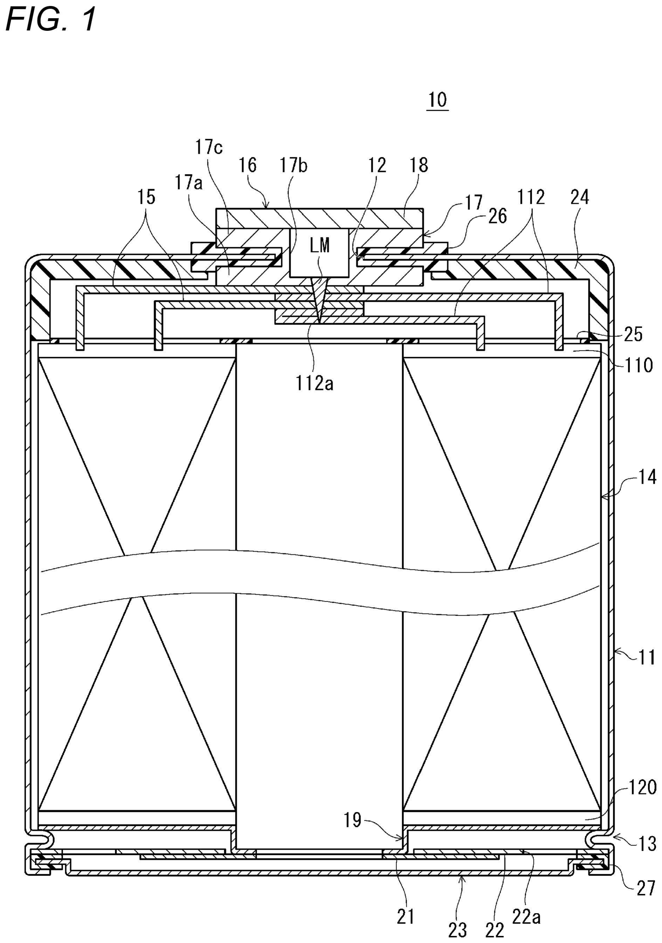

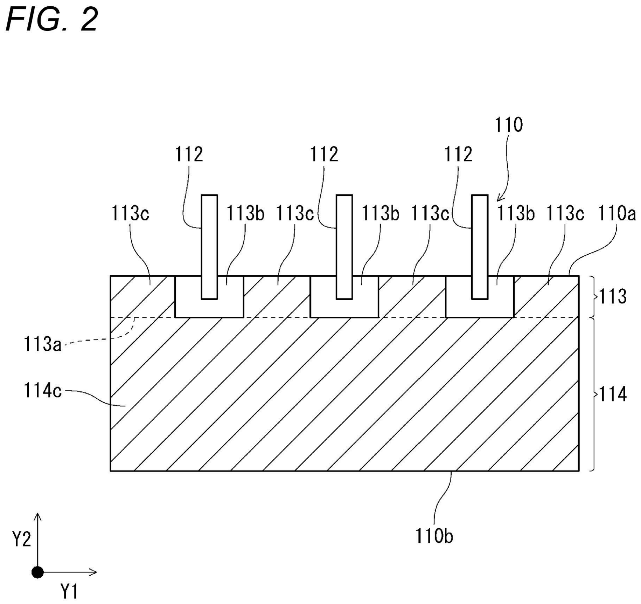

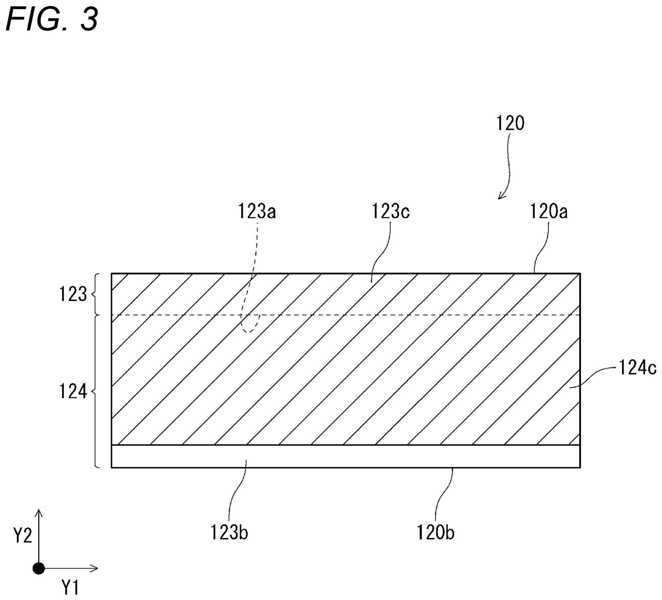

FIG. 1 is a schematic cross-sectional view of an exemplary secondary battery 10 according to the present embodiment. FIG. 2 is a schematic plan view of an example of a positive electrode according to the present embodiment. FIG. 3 is a schematic plan view of an example of a negative electrode according to the present embodiment. The actual lengths of the positive electrode and the negative electrode differ and the actual number of positive electrode leads may differ from those in the schematic diagrams.

The secondary battery 10 may be a lithium-ion secondary battery or a lithium secondary battery (lithium-metal secondary battery), for example. As illustrated in FIG. 1, the secondary battery 10 includes a non-polar case 11, a wound electrode group 14, a plurality of positive electrode leads 112 made of a conductor, a positive electrode terminal 16 made of a conductor, an end face current collector plate 19 made of a conductor, a negative electrode current collector plate 22 made of a conductor, and a sealing plate 23.

The case 11 is formed in a bottomed cylindrical shape having an opening at one end (lower end in FIG. 1). The case 11 is made of a metal. A through-hole 12 through which the positive electrode terminal 16 is inserted is formed in the center of the bottom (upper end in FIG. 1) of the case 11. The case 11 houses an electrolyte (not illustrated) together with the electrode group 14. In the vicinity of the opening of the case 11, a recess 13 is formed which is recessed radially inward of the case 11.

The electrode group 14 includes a positive electrode 110 and a negative electrode 120. The electrode group 14 is a wound electrode group formed by winding the positive electrode 110 and the negative electrode 120 with a separator (not illustrated) therebetween. The electrode group 14 is generally cylindrical as a whole.

Respective one ends of the positive electrode leads 112 are connected to positive electrode current collector-exposed portions 113b in a positive electrode edge portion 113 of the positive electrode 110. The other ends of the positive electrode leads 112 are provided so as to be planted and stand from one of the end faces of the electrode group 14.

The plurality of positive electrode leads 112 are overlapped and connected to the positive electrode terminal 16 by welding. In the present embodiment, the number of the positive electrode leads 112 is eight, but is not limited thereto. Also, only four of the eight positive electrode leads 112 are illustrated in FIG. 1.

Examples of the material of the positive electrode leads 112 include stainless steel, aluminum, aluminum alloys, nickel, and nickel alloys.

Between the electrode group 14 and the bottom of the case 11, an insulating member 24 is provided to electrically insulate them from each other. The insulating member 24 is formed of an insulative resin, for example. The insulating member 24 may be attached to the bottom of the case 11.

The positive electrode terminal 16 is provided on the side opposite the electrode group 14 with the plurality of positive electrode leads 112 therebetween. The positive electrode terminal 16 is inserted through the through-hole 12 at the bottom of the case 11 and passes through the bottom of the case 11. The positive electrode terminal 16 is made of a metal, and a rivet or the like is used. The positive electrode terminal 16 is insulated from the case 11 by a positive electrode gasket 26 made of an insulative material. An insulation plate 25 for electrically insulating the positive electrode terminal 16 and the electrode group 14 is provided between them.

The positive electrode terminal 16 includes a first terminal member 17 extending in and out of the case 11, and a disk-shaped second terminal member 18 joined to the first terminal member 17 and exposed to the outside of the case 11. The first terminal member 17 includes a disk-shaped first portion 17a, a hollow-cylindrical second portion 17b that is formed continuously to the first portion 17a and inserted in the through-hole 12, and a third portion 17c that extends radially outward from an end of the second portion 17b and to which the second terminal member 18 is joined. The first terminal member 17 is welded at the first portion 17a to the plurality of positive electrode leads 112 by irradiation of a laser in the direction from the first terminal member 17 toward the electrode group 14. In the above configuration, the positive electrode terminal 16 is electrically connected to the positive electrode 110 via the plurality of positive electrode leads 112 to function as an external positive electrode terminal of the secondary battery 10. The first terminal member 17 is an example of a terminal member.

At least a positive electrode lead 112 (the lowermost positive electrode lead 112 in FIG. 1) of the plurality of positive electrode leads 112 that is closest to the electrode group 14 includes a folded portion 112a formed by folding a part (specifically, a part on the distal end side) of the positive electrode lead 112 and having a part of a laser mark LM formed by the laser. The folded portion 112a is located on the side opposite the electrode group 14 with the insulation plate 25 therebetween.

The end face current collector plate 19 is made of a metal. The shape of the end face current collector plate 19 is not particularly limited, and may be generally cross-shaped as a whole, for example. The end face current collector plate 19 is electrically connected to the negative electrode 120 of the electrode group 14.

The negative electrode current collector plate 22 is electrically connected to the end face current collector plate 19 via a metal-made communication plate 21 (which can be formed in a ring-like shape, for example). Thus, the negative electrode current collector plate 22 is electrically connected to the negative electrode 120. The negative electrode current collector plate 22 and the communication plate 21 may be welded (e.g., laser-welded) to each other. The communication plate 21 and the end face current collector plate 19 may be welded (e.g., laser welded) to each other. Alternatively, the negative electrode current collector plate 22 may be directly connected to the end face current collector plate 19. In this case, the communication plate 21 is unnecessary. The negative electrode current collector plate 22 has one or more injection holes 22a through which a liquid electrolyte is injected into the case 11. The negative electrode current collector plate 22 is welded (e.g., laser-welded) at its outer edge to the recess 13 of the case 11. Thus, the case 11 is electrically connected to the negative electrode 120 via the negative electrode current collector plate 22 and the like.

The sealing plate 23 seals the opening of the case 11. The sealing plate 23 is made of a metal and is generally disc-shaped. The sealing plate 23 is insulated from the case 11 by a negative electrode gasket 27. The sealing plate 23 of the present embodiment is electrically connected to neither the positive electrode 110 nor the negative electrode 120 of the electrode group 14, but is not limited thereto. The sealing plate 23 includes an explosion-proof mechanism (not illustrated) that acts upon the internal pressure of the case 11 exceeding a predetermined value.

The positive electrode 110 illustrated in FIG. 2 is in the state before being wound into the electrode group 14. In FIG. 2, an arrow Y1 indicates the winding direction of the positive electrode 110 when assembling the electrode group 14 and corresponds to the longitudinal direction of the positive electrode 110. Also, an arrow Y2 in FIG. 2 perpendicular to the arrow Y1 is the winding axial direction of the positive electrode 110 (i.e., the winding axial direction of the electrode group 14) and corresponds to the lateral direction of the positive electrode 110.

As illustrated in FIG. 2, the positive electrode 110 includes a positive electrode edge portion 113 that includes an edge 110a of the positive electrode 110 in the lateral direction, and a positive electrode main portion 114 other than the positive electrode edge portion 113. The positive electrode main portion 114 is an area from a positive electrode center-side end 113a of the positive electrode edge portion 113 to another edge 110b of the positive electrode 110 in the lateral direction. The ratio between the width (length in the lateral direction) of the positive electrode edge portion 113 and the width (length in the lateral direction) of the positive electrode main portion 114 is in the range of 1:15 to 3:4 or 1:12 to 1:6, for example.

The positive electrode edge portion 113 of the positive electrode 110 includes positive electrode current collector-exposed portions 113b where a positive electrode mixture layer is not formed on the positive electrode current collector, and a first positive electrode mixture portion 113c where the positive electrode mixture layer is formed on the positive electrode current collector. The positive electrode main portion 114 includes a second positive electrode mixture portion 114c where the positive electrode mixture layer is formed on the positive electrode current collector.

The respective positive electrode current collector-exposed portions 113b are provided at a plurality of (e.g., eight) positions intermittently along the longitudinal direction of the positive electrode current collector. The exposed portions 113b do not include the positive electrode mixture layer from the one edge 110a in the lateral direction of the positive electrode 110 to the positive electrode main portion 114.

The length of each positive electrode current collector-exposed portion 113b in the longitudinal direction of the positive electrode current collector may be 1% to 10% of the length of the positive electrode current collector in the longitudinal direction. The sum of the lengths of all the positive electrode current collector-exposed portions 113b in the longitudinal direction of the positive electrode current collector may be 1% to 20% of the length of the positive electrode current collector in the longitudinal direction, or 5% to 20% or 8% to 20%.

Desirably, the distances between the positive electrode current collector-exposed portions 113b adjacent to each other are as equal as possible. For example, given that L100 represents the length of the positive electrode current collector and n represents the number of the positive electrode current collector-exposed portions 113b, the distances between the positive electrode current collector-exposed portions adjacent to each other 113b may be 0.8 × L100/n to 1.2 × L100/n.

A tab-shaped positive electrode lead 112 is connected to each of the positive electrode current collector-exposed portions 113b. The plurality of positive electrode leads 112 are bundled and connected to the first portion 17a of the first terminal member 17.

A mass W1 of the positive electrode mixture layer per unit area provided on the surface of the positive electrode current collector in the first positive electrode mixture portion 113c may be the same as a mass W2 of the positive electrode mixture layer per unit area in the second positive electrode mixture portion 114c. When W1 and W2 differ from each other, the proportion of a difference (ΔW) between W1 and W2 to W1 may be, for example, 4% or less, 3% or less, 2% or less, or 1% or less.

As illustrated in FIG. 3, the negative electrode 120 includes a negative electrode edge portion 123 that faces at least a part (preferably 70% or more) of the positive electrode edge portion 113, and a negative electrode main portion 124 other than the negative electrode edge portion 123. The negative electrode main portion 124 faces at least a part (preferably 70% or more) of the positive electrode main portion 114. That is, the negative electrode 120 includes a negative electrode edge portion 123 that includes one edge 120a of the negative electrode 120 in the lateral direction, and a negative electrode main portion 124 other than negative electrode edge portion 123. The negative electrode main portion 124 is an area from a negative electrode center-side end 123a of the negative electrode edge portion 123 to another edge 120b of the negative electrode 120 in the lateral direction. The ratio between the width (length in the lateral direction) of the negative electrode edge portion 123 and the width (length in the lateral direction) of the negative electrode main portion 124 is, for example, in the range of 1:15 to 3:4 or 1:12 to 1:6, likewise for the positive electrode 110.

The negative electrode 120 includes, at the other edge 120b in the lateral direction of the negative electrode 120, a negative electrode current collector-exposed portion 123b where the negative electrode mixture layer is not formed on the negative electrode current collector. The negative electrode current collector-exposed portion 123b is formed along the longitudinal direction of the negative electrode current collector. Accordingly, the negative electrode current collector-exposed portion 123b is exposed at the other end face of the electrode group 14. The negative electrode current collector-exposed portion 123b is connected to the end surface current collector plate 19, for example, by laser welding.

The negative electrode edge portion 123 may be designed to have a swelling ratio larger than that of the negative electrode main portion 124. That is, the first negative electrode mixture portion 123c of the negative electrode edge portion 123 may have a composition different from that of the second negative electrode mixture portion 124c of the negative electrode main portion 124. In that case, deformation of the negative electrode 120 due to charging and discharging of the secondary battery 10 is unlikely to occur.

### [Electrolyte]

The electrolyte may be a liquid electrolyte (electrolyte solution), a gel electrolyte, or a solid electrolyte. The liquid electrolyte is an electrolyte solution containing, for example, a nonaqueous solvent and a salt dissolved in the nonaqueous solvent. The concentration of the salt in the electrolyte solution is 0.5 mol/L or more and 2 mol/L or less, for example. The electrolyte solution may contain a known additive.

The gel electrolyte contains a salt and a matrix polymer, or contains a salt, a nonaqueous solvent, and a matrix polymer. As the matrix polymer, a polymer material that absorbs the nonaqueous solvent to gel is used, for example. Examples of the polymer material include fluorocarbon resins, acrylic resins, polyether resins, and polyethylene oxides.

As the solid electrolyte, a material (e.g., an oxide-based solid electrolyte, a sulfide-based solid electrolyte, or a halide-based solid electrolyte) known in the field of all-solid lithium-ion secondary batteries is used, for example.

For example, a nonaqueous electrolyte in a liquid state is prepared by dissolving a salt in a nonaqueous solvent. The salt is an electrolyte salt that ionically dissociates in an electrolyte, and can include, for example, a lithium salt. The electrolyte can contain various additives. The electrolyte is typically used in a liquid form, but may be in a state in which the fluidity is restricted by a gelling agent or the like.

Examples of the nonaqueous solvent that can be used include cyclic carbonic acid esters, chain carbonic acid esters, cyclic carboxylic acid esters, and chain carboxylic acid esters. Examples of the cyclic carbonic acid esters include propylene carbonate (PC) and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl formate, ethyl formate, propyl formate, methyl acetate, ethyl acetate, propyl acetate, methyl propionate, ethyl propionate, and propyl propionate. One nonaqueous solvent may be used by itself, or two or more nonaqueous solvents may be used in combination.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, LiI, borates, and imide salts. Examples of the borates include lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-oleate-1-benzenesulfonate-O,O') borate. Examples of the imide salts include lithium bis(fluorosulfonyl)imide (LiN(FSO₂)₂), lithium bis(trifluoromethanesulfonyl)imide (LiN(CF₃SO₂)₂), lithium trifluoromethanesulfonyl(nonafluorobutanesulfonyl)imide (LiN(CF₃SO₂)(C₄F₉SO₂)), and lithium bis(pentafluoroethanesulfonyl)imide (LIN(C₂F₅SO₂)₂). One lithium salt may be used by itself, or two or more lithium salts may be used in combination. The concentration of the lithium salt in the nonaqueous electrolyte is 0.5 mol/L or more and 2 mol/L or less, for example.

### [Separator]

Desirably, the separator is provided between the positive electrode and the negative electrode. The separator is excellent in ion permeability and has appropriate mechanical strength and insulating properties. As the separator, a microporous thin film, a woven fabric, or a nonwoven fabric can be used, for example. As the material of the separator, polyolefin such as polypropylene or polyethylene is preferred.

### (Supplemental Note)

According to the above description of the embodiments, the following techniques are disclosed.

### (Technique 1)

A secondary battery including:
a positive electrode; a negative electrode; an electrolyte; and a separator,
wherein the positive electrode and the negative electrode are wound with the separator therebetween,
the positive electrode includes a positive electrode current collector having a band shape, and a positive electrode mixture layer provided on the positive electrode current collector,
the positive electrode includes a positive electrode edge portion that includes one edge of the positive electrode in a lateral direction, and a positive electrode main portion other than the positive electrode edge portion,
the positive electrode edge portion includes one or more positive electrode current collector-exposed portions that are provided partially at respective positions along a longitudinal direction of the positive electrode current collector, the positive electrode current collector-exposed portions not including the positive electrode mixture layer from the one edge of the positive electrode in the lateral direction to the positive electrode main portion,
the positive electrode mixture layer contains a positive electrode active material and a binder, and
the binder contains a first resin in an amorphous state.

### (Technique 2)

The secondary battery according to Technique 1, wherein the binder further contains a second resin in a crystalline state.

### (Technique 3)

The secondary battery according to Technique 1 or 2, wherein the positive electrode edge portion includes the positive electrode current collector-exposed portions that are intermittently provided along the longitudinal direction of the positive electrode current collector.

### (Technique 4)

The secondary battery according to any one of Techniques 1 to 3, wherein a mass of the positive electrode mixture layer per unit area provided on a surface of the positive electrode current collector is 240 g/m² or more.

### (Technique 5)

The secondary battery according to any one of Techniques 1 to 4, wherein a mass of the positive electrode mixture layer per unit area provided on a surface of the positive electrode current collector is 260 g/m² or more.

### (Technique 6)

The secondary battery according to any one of Techniques 1 to 5, wherein a mass of the positive electrode mixture layer per unit area provided on a surface of the positive electrode current collector is 280 g/m² or more.

### (Technique 7)

The secondary battery according to any one of Techniques 1 to 6, wherein a mass of the positive electrode mixture layer per unit area provided on a surface of the positive electrode current collector is 280 g/m² or more and 350 g/m² or less.

### (Technique 8)

The secondary battery according to any one of Techniques 1 to 7, wherein the first resin is a non-fluoropolymer, and the second resin is a fluoropolymer.

### (Technique 9)

The secondary battery according to any one of Techniques 1 to 8, wherein the first resin is a non-fluoropolymer and the second resin is a polyvinylidene fluoride-based polymer.

### (Technique 10)

The secondary battery according to any one of Techniques 1 to 9, wherein the first resin is a rubber-based polymer, and the second resin is a polyvinylidene fluoride-based polymer.

### (Technique 11)

The secondary battery according to any one of Techniques 1 to 10, wherein the first resin is a nitrile-based polymer or a styrene-based polymer, and the second resin is a polyvinylidene fluoride-based polymer.

### (Technique 12)

The secondary battery according to any one of Techniques 1 to 11, wherein a ratio between a length of the positive electrode edge portion in the lateral direction and a length of the positive electrode main portion in the lateral direction is in a range of 1:12 to 1:6.

### (Technique 13)

The secondary battery according to any one of Techniques 1 to 12, wherein a sum of lengths of all the positive electrode current collector-exposed portions in the longitudinal direction of the positive electrode current collector is 1% to 20% of a length of the positive electrode current collector in the longitudinal direction.

### (Technique 14)

The secondary battery according to any one of Techniques 1 to 13, wherein given that L100 represents a length of the positive electrode current collector and n represents a number of the positive electrode current collector-exposed portions, distances between the positive electrode current collector-exposed portions adjacent to each other are 0.8 × L100/n to 1.2 × L100/n.

Hereinafter, the present invention is described based on examples and comparative examples. However, the present invention is not limited to the following examples.

### <Examples 1 to 6 and Comparative Examples 1 to 5>

### [Positive Electrode Production]

A positive electrode slurry was obtained by adding an appropriate amount of NMP to a positive electrode mixture. As the positive electrode mixture, a mixture of a lithium-containing composite oxide being a positive electrode active material, carbon black being a conductive aid, and a binder was used. LiNi_{0.8}Co_{0.1}Mn_{0.1}O₂ was used as the lithium-containing composite oxide. The mass ratio of the lithium-containing composite oxide, the carbon black, and the binder in the positive electrode mixture was set to 98:1:1.

As the binder, the following two types were used at a ratio of M1/(M1 + M2) that satisfies one of the values shown in Table 1, where M1 is the mass of a first resin A and M2 is the mass of a second resin B.

First resin A in amorphous state: nitrile group-containing rubber having a weight-average molecular weight Mw1 of about 100,000.

Second resin B in crystalline state: polyvinylidene fluoride (PVdF) having a weight-average molecular weight Mw2 of about 1,000,000.

The positive electrode slurry was applied to both surfaces of an aluminum foil being a positive electrode current collector with a predetermined thickness and the coated films were dried and rolled to form positive electrode mixture layers. Thus, a positive electrode as illustrated in FIG. 2 was obtained. Specifically, the positive electrode slurry was intermittently applied to one edge side of the aluminum foil in the lateral direction along the longitudinal direction of the positive electrode current collector with a predetermined thickness, the positive electrode slurry was applied to the rest of the positive electrode current collector with the same thickness, and the coated films were dried and rolled. Thus, a positive electrode was formed that includes a positive electrode edge portion including a first positive electrode mixture portion, and a positive electrode main portion including a second positive electrode mixture portion. The mass of the positive electrode mixture layer per unit area provided on the surface of the positive electrode current collector was controlled to be one of the values shown in Table 1. Eight positive electrode current collector-exposed portions were provided in the positive electrode edge portion, and positive electrode leads were attached to the respective exposed portions.

The width (length in the lateral direction) of the positive electrode edge portion was set to 12 mm, and the width (length in the lateral direction) of the positive electrode main portion was set to 62 mm (the ratio of the length of the positive electrode edge portion in the lateral direction to the length of the positive electrode main portion in the lateral direction was 1:5.2).

The sum of the lengths of the eight positive electrode current collector-exposed portions in the longitudinal direction of the positive electrode current collector was 10% of the length of the positive electrode current collector in the longitudinal direction.

When the length L100 of the positive electrode current collector is 720 mm and the number n of the positive electrode current collector-exposed portions is 8, the distances between the exposed portions adjacent to each other is L100/8 = 90.

### [Evaluation 1]

### <Peel Strength>

The peel strength between the positive electrode mixture layer and the positive electrode current collector was measured by a peel test in accordance with JIS K 6854-1. Table 1 indicates the peel strength of each battery in terms of Good, Mediocre, or No good, with the peel strength of a battery B1 defined as 1.0. "Good" is used to indicate a case where the relative peel strength of the battery was 0.7 or more, "Mediocre" is used to indicate a case where the relative peel strength of the battery was 0.3 or more and less than 0.7, and an "No good" was used to indicate a case where the relative peel strength of the battery was less than 0.3.

### [Negative Electrode Production]

A negative electrode slurry was obtained by adding an appropriate amount of water to a negative electrode mixture containing SiOₓ (x =1.0) being a negative electrode active material, graphite being a negative electrode active material, styrene-butadiene copolymer rubber (SBR) being a binder, and carboxymethylcellulose (CMC) being a thickener. The mass ratio SiOₓ:graphite:SBR:CMC in the negative electrode mixture was set to 5:93:1:1.

The negative electrode slurry was applied to both surfaces of a copper foil being a negative electrode current collector with a predetermined thickness, dried, and rolled to form negative electrode mixture layers. Thus, a negative electrode as illustrated in FIG. 3 was obtained. Specifically, the negative electrode slurry was applied to the surfaces of the copper foil uniformly with a predetermined thickness, dried, and rolled to simultaneously form a first negative electrode mixture portion and a second negative electrode mixture portion. However, parts of one of edge portions of the negative electrode current collector were left exposed. The thickness of the negative electrode mixture portion was appropriately changed according to the thickness of the positive electrode mixture layer.

### [Electrolyte Preparation]

An electrolyte was prepared by adding vinylene carbonate (VC) to a nonaqueous solvent obtained by mixing ethylene carbonate (EC) and dimethyl carbonate (DMC) in a volume ratio of 1:3, and dissolving LiPF₆. The content of VC in the entire electrolyte was set to 5% by mass. The concentration of LiPF₆ in the electrolyte was set to 1.5 mol/L.

### [Secondary Battery Production]

The positive electrode and the negative electrode were wound with a separator (a microporous film formed of polyethylene) therebetween in an inert gas atmosphere to produce an electrode group. The electrodes were stacked so that the positive electrode edge portion was positioned on one end face side of the electrode group while the negative electrode current collector-exposed portions were positioned on the other end face side of the electrode group. A cylindrical lithium-ion secondary battery (any of batteries A1 to A6 of Examples and batteries B1 to B5 of Comparative Examples) as illustrated in FIG. 1 was completed using the electrode group and the electrolyte.

A plurality of positive electrode leads were bundled and electrically connected to the first portion of a first terminal member. The negative electrode current collector-exposed portions were connected to an end face current collector plate by laser welding, and the end face current collector plate was electrically connected to a negative electrode current collector plate via a communication plate.

### [Evaluation 2]

### (Winding Property)

Ten secondary batteries of each of Examples and ten secondary batteries of each of Comparative Examples were produced and then disassembled to check the occurrence or non-occurrence of fractures of the positive electrode. In Table 1, "Good" indicates a case where no fractures were confirmed, "Mediocre" indicates a case where only minute cracks having a length of 1 mm or less were confirmed although no fractures were confirmed, and "No good" indicates a case where at least one fracture was confirmed.

### (Capacity Ratio)

Constant current charging at 0.2 C was performed in an environment at 25°C. When the battery voltage reached 4.2 V, constant voltage charging was then performed until the charge current reached 0.02 C. After a ten-minute pause, constant current discharging at 0.2 C was performed until the battery voltage reached 2.5 V. The discharge capacity at that time was determined, and the volume energy density of the electrode group was determined. Table 1 shows each volume energy density of the other batteries, expressed as a capacity ratio (%), with the volume energy density of the battery B1 of Comparative Example 1 defined as 100%.

**[Table 1]**

| Battery | Positive electrode mixture laver mass/unit area (g/m²) | M1/(M1 + M2) | Winding property | Peel strength | Capacity ratio (%) |
|---|---|---|---|---|---|
| A1 | 240 | 0.1 | Good | Good | 120 |
| A2 | 260 | 0.2 | Good | Good | 130 |
| A3 | 280 | 0.3 | Good | Good | 140 |
| A4 | 350 | 0.6 | Good | Good | 175 |
| A5 | 240 | 1 | Good | Mediocre | 120 |
| A6 | 350 | 1 | Good | No good | 175 |
| B1 | 200 | 0 | Good | Good | 100 |
| B2 | 240 | 0 | Mediocre | Good | 120 |
| B3 | 260 | 0 | No good | Good | 130 |
| B4 | 280 | 0 | No good | Good | 140 |
| B5 | 350 | 0 | No good | Mediocre | 175 |

It can be understood from Table 1 that when only the first resin in an amorphous state, or a combination of the first resin and the second resin in crystalline state, is used as a binder, a superior winding property (fracture resistance) can be achieved compared with when only the second resin is used. It can be also understood that the larger the mass of the positive electrode mixture layer per unit area provided on the surface of the positive electrode current collector, the more difficult it is to maintain the winding property.

### [Industrial Applicability]

The secondary battery according to the present disclosure is useful for main power sources of, for example, mobile communication devices, portable electronic devices, and electric vehicles.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: Secondary battery
11: Case
   12: Through-hole
   13: Recess
14: Electrode group
16: Positive electrode terminal
   17: First terminal member (terminal member)
      17a: First portion
      17b: Second portion
      17c: Third portion
   18: Second terminal member
19: End face current collector plate
21: Communication plate
22: Negative electrode current collector plate
   22a: Injection hole
23: Sealing plate
24: Insulating member
25: Insulation plate
26: Positive electrode gasket
27: Negative electrode gasket
110: Positive electrode
   110a: One edge
   110b: Other edge
   112: Positive electrode lead
   112a: Folded portion
   113: Positive electrode edge portion
   113a: Positive electrode center-side end
   113b: Positive electrode current collector-exposed portion
   113c: First positive electrode mixture portion
   114: Positive electrode main portion
   114c: Second positive electrode mixture portion
120: Negative electrode
   120a: One edge
   120b: Other edge
   123: Negative electrode edge portion
   123a: Negative electrode center-side end
   123b: Negative electrode current collector-exposed portion
   123c: First negative electrode mixture portion
   124: Negative electrode main portion
   124c: Second negative electrode mixture portion

## Claims

1. A secondary battery comprising:
a positive electrode; a negative electrode; an electrolyte; and a separator,
wherein the positive electrode and the negative electrode are wound with the separator therebetween,
the positive electrode includes a positive electrode current collector having a band shape, and a positive electrode mixture layer provided on the positive electrode current collector,
the positive electrode includes a positive electrode edge portion that includes one edge of the positive electrode in a lateral direction, and a positive electrode main portion other than the positive electrode edge portion,
the positive electrode edge portion includes one or more positive electrode current collector-exposed portions that are provided partially at respective positions along a longitudinal direction of the positive electrode current collector, the positive electrode current collector-exposed portions not including the positive electrode mixture layer from the one edge of the positive electrode in the lateral direction to the positive electrode main portion,
the positive electrode mixture layer contains a positive electrode active material and a binder, and
the binder contains a first resin in an amorphous state.

2. The secondary battery according to claim 1,
wherein the binder further contains a second resin in a crystalline state.

3. The secondary battery according to claim 1 or 2,
wherein the positive electrode edge portion includes the positive electrode current collector-exposed portions that are intermittently provided along the longitudinal direction of the positive electrode current collector.

4. The secondary battery according to claim 1 or 2,
wherein a mass of the positive electrode mixture layer per unit area provided on a surface of the positive electrode current collector is 240 g/m² or more.

5. The secondary battery according to claim 1 or 2,
wherein a mass of the positive electrode mixture layer per unit area provided on a surface of the positive electrode current collector is 260 g/m² or more.

6. The secondary battery according to claim 1 or 2,
wherein a mass of the positive electrode mixture layer per unit area provided on a surface of the positive electrode current collector is 280 g/m² or more.

7. The secondary battery according to claim 1 or 2,
wherein a mass of the positive electrode mixture layer per unit area provided on a surface of the positive electrode current collector is 280 g/m² or more and 350 g/m² or less.

8. The secondary battery according to claim 2,
wherein the first resin is a non-fluoropolymer, and the second resin is a fluoropolymer.

9. The secondary battery according to claim 2,
wherein the first resin is a non-fluoropolymer and the second resin is a polyvinylidene fluoride-based polymer.

10. The secondary battery according to claim 2,
wherein the first resin is a rubber-based polymer, and the second resin is a polyvinylidene fluoride-based polymer.

11. The secondary battery according to claim 2,
wherein the first resin is a nitrile-based polymer or a styrene-based polymer, and the second resin is a polyvinylidene fluoride-based polymer.

12. The secondary battery according to claim 1 or 2,
wherein a ratio between a length of the positive electrode edge portion in the lateral direction and a length of the positive electrode main portion in the lateral direction is in a range of 1:12 to 1:6.

13. The secondary battery according to claim 1 or 2,
wherein a sum of lengths of all the positive electrode current collector-exposed portions in the longitudinal direction of the positive electrode current collector is 1% to 20% of a length of the positive electrode current collector in the longitudinal direction.

14. The secondary battery according to claim 1 or 2,
wherein given that L100 represents a length of the positive electrode current collector and n represents a number of the positive electrode current collector-exposed portions, distances between the positive electrode current collector-exposed portions adjacent to each other are 0.8 × L100/n to 1.2 × L100/n.
